Europäisches Patentamt

European Patent Office

Office européen des brevets

(19)

Veröffentlichungsnummer: **0 277 559**

**A2**

(12) **EUROPÄISCHE PATENTANMELDUNG**

(21) Anmeldenummer: **88100913.8**

(22) Anmeldetag: **22.01.88**

(51) Int. Cl.4: **B01D 53/34** , C01B 17/74 , C01B 17/775

(30) Priorität: 04.02.87 DE 3703235

(43) Veröffentlichungstag der Anmeldung:
10.08.88 Patentblatt 88/32

(84) Benannte Vertragsstaaten:
**AT BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Lailach, Günter, Dr.**
**Bismarckstrasse 105**
**D-4150 Krefeld(DE)**
Erfinder: **Gerken, Rudolf, Dr.**
**Ratherstrasse 79**
**D-4150 Krefeld(DE)**
Erfinder: **Richert, Hans-Jürgen, Dr.**
**Elisabeth-Langgaesser-Strasse 28**
**D-5090 Leverkusen(DE)**

(54) **Verfahren zur Reinigung von Abgasen.**

(57) Die vorliegende Erfindung betrifft ein Verfahren zur Abtrennung von Staub, $SO_3$, HCl, HF aus Abgasen durch mehrstufige Wäsche mit Schwefelsäure, wobei zuerst mit konzentrierter Schwefelsäure Staub und $SO_3$ aus dem Abgas ausgewaschen werden und anschließend mit verdünnter Schwefelsäure HCl und HF aus dem Abgas ausgewaschen und anschließend aus einem Gemisch der konzentrierten und der verdünnteren Schwefelsäure ausgeblasen werden.

EP 0 277 559 A2

## Verfahren zur Reinigung von Abgasen

Die vorliegende Erfindung betrifft ein Verfahren zur Abtrennung von Staub, $SO_3$, HCl, HF aus Abgasen durch mehrstufige Wäsche mit Schwefelsäure, wobei zuerst mit konzentrierter Schwefelsäure Staub and $SO_3$ aus dem Abgas ausgewaschen werden and anschließend mit verdünnter Schwefelsäure HCl und HF aus dem Abgas ausgewaschen und anschließend aus einem Gemisch der konzentrierten und der verdünnteren Schwefelsäure ausgeblasen werden.

Aus der EP-A 177 806 ist ein Verfahren zur Reinigung von Rauchgasen durch mehrstufige Wäsche mit Schwefelsäure und Katalytische Oxidation des Schwefeldioxids an feuchter Aktivkohle unter Bildung von verdünnter Schwefelsäure bekannt. Bei diesem Verfahren wird die verdünnte Schwefelsäure unter Ausnutzung der Rauchgaswärme konzentriert. Gleichzeitig werden Staub, $SO_3$, HCl und HF aus dem Rauchgas ausgewaschen. HCl und HF werden durch Ausblasen aus der Schwefelsäure entfernt und mit Wasser aus dem Ausblasegas ausgewaschen. Dabei fällt gering mit HCl und HF belastetes Abwasser an.

Darüber hinaus beschreibt die DE 3 124 671 C2 ein Verfahren zum selektiven Abscheiden von Chloriden und Fluoriden aus Schwefelverbindungen enthaltenden Gasen mit Hilfe einer Alkali-und/oder Erdalkalimetall-Chlorid-Lösung als Absorbens vor deren Entschwefelung. Dies wird so durchgeführt, daß bei einem Verfahren der eingangs erwähnten Art im Waschkreislauf die auf einen pH-Wert von unter 7 eingestellte Alkali-bzw. Erdalkalimetallchlorid-Lösung umgewälzt, dabei im Waschkreislauf freie Säuren gebildet werden, eine Teilmenge der Lösung in einem Sekundärkreislauf ausgeschleust wird und hier zum Neutralisieren der freien Säuren Alkali-und/oder Erdalkalimetalloxide, -hydroxide oder -carbonate in einer solchen Menge zugegeben werden, daß ein Teil der freien Säuren erhalten bleibt, in jedem Fall aber kein Überschuß an Carbonaten oder Hydroxiden in der Lösung verbleibt, daß dabei ausfallende Feststoffe aus dem Sekundärkreislauf entfernt, eine Teilmenge der Lösung ausgeschleust und der Rest dem Waschkreislauf wieder zugeführt wird.

Nachteilig an diesem Verfahren ist, daß hierbei Gips anfällt, für den eine Verwendung gefunden werden muß, wenn er nicht einer Deponie zugeführt werden soll. Die Arbeitsweise bei pH-Werten unter 7 bringt bekanntermaßen Korrosionsprobleme mit sich.

Es ist daher die Aufgabe der vorliegenden Erfindung, ein Verfahren zur Verfügung zu stellen, welches einerseits die ökologischen Anforderungen erfüllt, gleichzeitig aber nicht die Nachteile der oben beschriebenen Verfahren aufweist.

Überraschenderweise kann diese Aufgabe in einfacher Weise dadurch gelöst werden, daß die in den Abgasen enthaltenen Halogenwasserstoffe mit einem Gas aus der Schwefelsäure ausgeblasen werden und durch anschließenden Kontakt mit einem Calciumhydroxid oder Calciumcarbonat enthaltenden Waschmedium in Calciumfluorid und Calciumchlorid überführt werden.

Gegenstand der vorliegenden Erfindung ist somit ein Verfahren zur Abtrennung von Staub, $SO_3$, HCl, HF aus Abgasen durch mehrstufige Wäsche mit Schwefelsäure, wobei zuerst mit konzentrierter Schwefelsäure Staub und $SO_3$ aus dem Abgas ausgewaschen werden und anschließend mit verdünnter Schwefelsäure HCl und HF aus dem Abgas ausgewaschen und anschließend aus einem Gemisch der konzentrierten und der verdünnteren Schwefelsäure ausgeblasen werden, welches dadurch gekennzeichnet ist, daß das bei der Säureausblasung mit HCl und HF beladene Gas mit einer Caliumhydroxid oder Calciumcarbonat enthaltenden Lösung und/oder Suspension in Kontakt gebracht wird.

Das erfindungsgemäße Verfahren ist für HCl- und HF-Abtrennung aus beliebigen heißen Abgasen anwendbar. Besonders vorteilhaft ist das Verfahren für Abgase, die außer HCl und HF auch $SO_2$, $SO_3$, $NO_x$ und/oder Staub enthalten, weil eine Trennung der Halogenwasserstoffe von den anderen Verunreinigungen vor der Bildung des $CaF_2$ in der $CaCl_2$-Lösung erfolgt.

Besonders bevorzugte Abgase im Sinne dieser Erfindung sind Kalziniergase. Ebenso vorteilhaft ist das erfindungsgemäße Verfahren für die Reinigung von Rauchgasen aus Feuerungsanlagen durchführbar.

Die HCl-und HF-haltigen heißen Abgase werden zuerst mit 50-96 %iger Schwefelsäue staubfrei gewaschen. Anschließend werden durch eine Wäsche mit 1-20 %iger Schwefelsäure HCl und HF aus den Abgasen entfernt. Konzentrierte Schwefelsäure aus der ersten Wäsche und HCl-und HF-haltige Schwefelsäure aus der zweiten Wäsche werden in einem solchen Verhältnis gemischt, daß eine 40-80 %ige Schwefelsäure mit einer Temperatur von 70-120°C resultiert. Aus diesem Säuregemisch werden HCl und HF mittels eines Gases, vorzugsweise Luft und/oder Kohlendioxid, ausgeblasen. Das HCl und HF enhaltende Gas wird in einem Absorber mit einer Lösung oder Suspension in Kontakt gebracht, die $Ca(OH)_2$ und/oder $CaCO_3$ enthält. Bei der Absorption der Halogenwasserstoffe wird eine Suspension von $CaF_2$ in $CaCl_2$-Lösung gebildet.

Eine besonders bevorzugte Ausführungsform des erfindungsgemäßen Verfahrens besteht darin, daß das HCl-und HF-beladene Gas zuerst mit einer Lösung und/oder Suspension mit geringem Calciumhydroxid-oder Calciumcarbonat gehalt und danach mit einer Suspension und/oder Lösung mit hohem Calciumhydroxid-oder Calciumcarbonat in Kontakt gebracht wird.

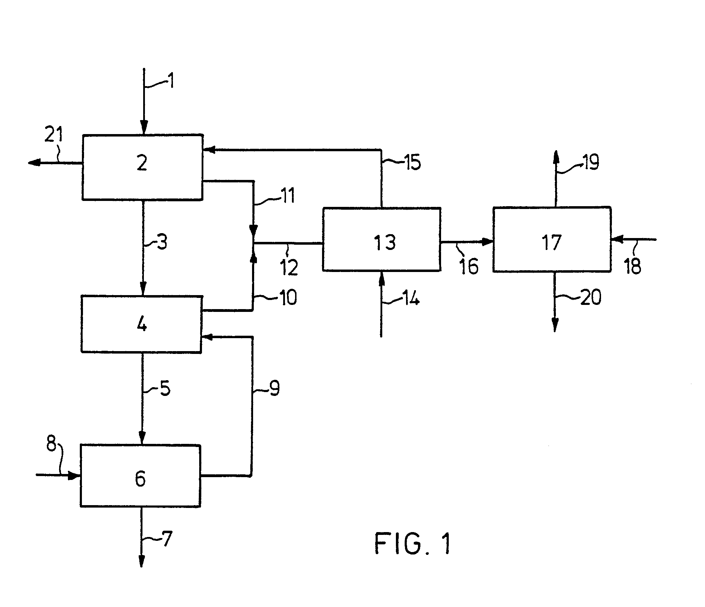

Die Vorteile des erfindungsgemäßen Verfahrens sollen durch eine detailliertere Beschreibung für das Anwendungsgebiet Rauchgasreinigung anhand der Fig. 1 erläutert werden:

Abgas (1) wird zuerst mit 50-85 %iger Schwefelsäure bei 90-110°C staub-und $SO_3$-frei gewaschen (2). Aus dem Wäscher (2) gelangt das Abgas (3) in einen zweiten Wäscher (4) in dem es mit 5-25 %iger Schwefelsäure gewaschen wird. Dabei werden HCl und HF weitgehend in der Schwefelsäure adsorbiert und das Abgas auf 50-60°C gekühlt. Das vorgereinigte Abgas (5) wird durch eine feuchte Aktivkohleschicht (6) geleitet, in der das $SO_2$ zu $H_2SO_4$ umgesetzt wird. Die gebildete Schwefelsäure wird durch Besprühen der Kohle mit Wasser (8) als 3-20 %ige Lösung (9) aus der Kohle ausgewaschen. Das entschwefelte Abgas (7) kann zum Kamin oder zu einer Denoxierungsanlage geleitet werden. Die verdünnte Schwefelsäure (9), die geringe Mengen HCl und HF enthalten kann, wird in den zweiten Wäscher (4) eingeleitet, in dem sie auf 5-25 % $H_2SO_4$ konzentriert wird und gleichzeitig weiteres HCl und HF aus dem Abgas adsorbiert. Aus dem Wäscher (4) wird HCl-und HF-haltige Schwefelsäure (10) ausgespeist und mit so viel 50-85 %iger heißer Schwefel säure (11) aus dem Wäscher (2) gemischt, daß eine 40-65 %ige Schwefelsäure (12) mit einer Temperatur von 70-90°C resultiert, die in die Ausblasung (13) eingespeist wird.

In der Ausblasung (13), vorzugsweise einem Füllkörperturm, werden HCl und HF mit Hilfe eines Gases (14) aus der Schwefelsäure ausgeblasen. Die Säure (15) wird danach in den Wäscher (2) eingespeist, in dem sie auf 50-85 % $H_2SO_4$ eingedampft wird. Aus dem Wäscher (2) wird eine HCl-und HF-freie Schwefelsäure (21) ausgespeist. Das in der Ausblasung (13) mit HCl und HF beladene Gas (16) wird in die Absorption (17) eingeleitet, in der es mit einer Lösung oder Suspension in Kontakt gebracht wird, die $Ca(OH)_2$ oder $CaCO_3$ enthält (18).

Im Kontakt mit dem Absorptionsmittel werden HCl und HF unter Bildung von $CaCl_2$ und $CaF_2$ aus dem Gas entfernt. Das aus der Absorption (17) austretende Gas (19) wird vorzugsweise wieder in die Ausblasung (13) eingeleitet (14). Bei Verwendung von Calciumcarbonat als Absorptionsmittel wird ständig eine dem Umsatz entsprechende Menge $CO_2$ in die Atmosphäre oder zu einer Weiterverwertung abgegeben. Zur Ausblasung können vorzugsweise Luft oder Kohlendioxid verwendet werden.

Aus der Absorption (17) wird kontinuierlich oder diskontinuierlich eine Suspension abgezogen (20), die $CaCl_2$ gelöst und $CaF_2$ in fester Form enthält. Gegebenenfalls noch enthaltenes $Ca(OH)_2$ oder $CaCO_3$ wird vorteilhaft mit HCl zu $CaCl_2$ umgesetzt, bevor das $CaF_2$ abgetrennt wird. In einer bevorzugten Ausführungsform wird die Absorption (17) zweistufig durchgeführt, um einen vollständigen Umsatz des Calciumhydroxids oder -carbonats zu $CaF_2$ und $CaCl_2$ bei der Absorption zu erreichen.

Vorzugsweise erfolgt die HCl-und HF-Absorption bei 50-65°C, wobei eine Suspension von Calciumfluorid in mindestens 10 %iger, vorzugsweise 20-40 %iger Calciumchloridlösung erzeugt wird.

Ein besonderer Vorteil des erfindungsgemäßen Verfahrens liegt darin, daß bei der Ausblasung der Schwefelsäure nur HCl und HF in die Gasphase gelangen, so daß bei deren Absorption festes reines Calciumfluorid anfällt, das nach seiner Abtrennung bei einer Flußspatverarbeitung zugesetzt werden kann, und eine reine Calciumchloridlösung hoher Konzentration, für die ebenfalls wirtschaftliche Verwendungsmöglichkeiten bestehen.

Das erfindungsgemäße Verfahren stellt somit ein abwasserfreies Abgas-oder Rauchgasreinigungsverfahren dar, bei dem mit minimalem Energieaufwand $SO_2$ und $SO_3$ in verwertbare 50-85 %ige Schwefelssäure, HF in reinen Flußspat und HCl in reine konzentrierte Calciumchloridlösung überführt werden.

Beispiel (gemäß Fig. 1)

420 000 $m^3_n$/h Rauchgas (1) aus einer Kohlebefeuerten Kesselanlage mit 160 mg $HCl/m^3_n$, 12 mg $HF/m^3_n$, 2400 mg $SO_2/m^3_n$, 50 mg Staub/$m^3_n$, 1100 mg $NO_x/m^3$ und 8 mg $SO_3/m^3_n$ wurden in einem Wäscher (2) mit 70 %iger Feststoff-haltiger Schwefelsäure gewaschen (alle Konz.-Angaben in Gew.-%). Dabei erfolgte unter Abkühlung des Rauchgases von 130°C auf 100°C infolge Verdampfung von 7,3 t $H_2O$/h aus der Schwefelsäure die Entfernung des Staubes und des $SO_3$ aus dem Rauchgas. Das Staub-und $SO_3$-freie Rauchgas (3) wurde in einem Wäscher (4) mit 13,7 %iger Schwefelsäure gewaschen, wobei das Rauchgas auf 50°C abgekühlt und 10,3 t $H_2O$/h aus der Schwefelsäure verdampft wurden. In der Schwefelsäure wurden HCl und HF gelöst. Das aus dem Wäscher (4) austretende Rauchgas (5) enthielt noch 2400 mg $SO_2/m^3_n$ und 1100 mg $NO_x/m^3_n$ als

Verunreinigungen. Es wurde in einem Reaktor (6) durch eine feuchte Aktivkohle-Schicht geleitet, in der 94,3 % des $SO_2$ zu $H_2SO_4$ umgesetzt wurden. Die gebildete Schwefelsäure, 1,45 t/h, wurde durch Besprühen der Kohle mit Wasse (8) als 7 %ige Lösung (9) ausgewaschen und in den Wäscher (4) eingespeist.

Das Reingas (7) hatte eine Temperatur von 50°C und enthielt noch 4 mg $HCl/m^3{}_n$, 137 mg $SO_2/m^3{}_n$ und 1100 mg $NO_x/m^3{}_n$.

Aus dem Wäscher (4) wurden 10,6 t/h Säure ausgespeist (10), die 13,7 % $H_2SO_4$, 0,62 % HCl und 0,047 % HF enthielt. Diese Säure wurde mit 20 t/h feststoffhaltiger 70 %iger Schwefelsäure (11) aus dem Kreislauf des Wäschers (2) gemischt. Das Gemisch (12) enthielt 50,5 % $H_2SO_4$ sowie das gesamte aus dem Rauchgas entfernte HCl und HF. Es wurde mit einer Temperatur von 80°C in den Füllkörperturm (13) eingespeist, in dem mittels 1200 $m^3{}_n$ Luft/h HCl und HF aus der Schwefelsäure ausgeblasen wurden. Die ausgeblasene Schwefelsäure (15) wurde in den Wäscher (2) eingespeist, aus dem 2,1 t/h feststoff-haltige 70 %ige Schwefelsäure ausgespeist wurden.

Die HCl-und HF-haltige Luft (16) wurde in die Absorption (17) eingeleitet. Sie enthielt außer 54,6 g $HCl/m^3{}_n$, 4,17 g $HF/m^3{}_n$ und 18 Vol.% Feuchte keine luftfremden Stoffe.

In den Sumpf des Absorbers (17) wurden 2,5 $m^3$ Wasser vorgelegt, in dem 200 kg gemahlener Kalk suspendiert wurden (18). Danach wurden stündlich 100 kg Kalk zugegeben. Nach 10 Stunden wurden 2,2 $m^3$ Suspension aus der Vorlage entnommen (20) und 2 $m^3$ Wasser sowie 200 kg Kalk nachgefüllt. Weiterhin wurden stündlich 100 kg Kalk zugegeben und nach jeweils 10 Stunden die Entnahme von Suspension und die Zugabe von Wasser wiederholt.

Die entnommene Suspension wurde so lange mit konzentrierter Salzsäure (ca. 60 l) versetzt, bis keine $CO_2$-Entwicklung mehr erfolgte. Danach wurde in einer Filterpresse das feste $CaF_2$ von der $CaCl_2$-Lösung getrennt. Die Lösung enthielt 29 Gew.-% $CaCl_2$. Es wurden 348 kg $CaCl_2$-Lösung/h und 9,8 kg $CaF_2$/h gewonnen.

Im Absorber (17) stellte sich eine Temperatur von 58°C ein. Die aus dem Absorber (17) austretende Luft (19) enthielt keine luftfremden Stoffe.

**Ansprüche**

1. Verfahren zur Abtrennung von Staub, $SO_3$, HCl, HF aus Abgasen durch mehrstufige Wäsche mit Schwefelsäure, wobei zuerst mit konzentrierter Schwefelsäure Staub und $SO_3$ aus dem Abgas ausgewaschen werden und anschließend mit verdünnter Schwefelsäure HCl und HF aus dem Abgas ausgewaschen und anschließend aus einem Gemisch der konzentrierteren und der verdünnteren Schwefelsäure ausgeblasen werden, dadurch gekennzeichnet, daß das bei der Säureausblasung mit HCl und HF beladene Gas mit einer Calciumhydroxid und/oder Calciumcarbonat enthaltenden Lösung und/oder Suspension in Kontakt gebracht wird.

2. Verfahren gemäß Anspruch 1, dadurch gekennzeichnet, daß die Abgase Kalziniergase sind.

3. Verfahren gemäß Anspruch 1, dadurch gekennzeichnet, daß die Abgase Rauchgase aus Feuerungsanlagen sind.

4. Verfahren gemäß einem der Ansprüche 1 bis 3, dadurch gekennzeichnet, daß das HCl-und HF-beladene Gas zuerst mit einer Lösung und/oder Suspension mit geringem Calciumhydroxid-oder Calciumcarbonatgehalt und danach mit einer Suspension und/oder Lösung mit hohem Calciumhydroxid-oder Calciumcarbonatgehalt in Kontakt gebracht wird.

5. Verfahren gemäß einem oder merherer der Ansprüche 1 bis 4, dadurch gekennzeichnet, daß die HCl-und HF-Absorption bei 50 bis 65°C durchgeführt wird.

FIG. 1